# EUROPÄISCHE PATENTSCHRIFT

(11) **EP 0 657 755 B1**
(45) Veröffentlichungstag und Bekanntmachung des Hinweises auf die Patenterteilung: **11.03.1998**
(21) Anmeldenummer: 93810857.8
(22) Anmeldetag: 08.12.1993
(51) Int. Cl.: G02B 6/38

(54) **Adapter und Steckerteil für die Herstellung einer optischen Steckverbindung**
Adapter and connector for making an optical connection
Adapteur et connecteur pour faire une connexion optique

(43) Veröffentlichungstag der Anmeldung: 14.06.1995
(73) Patentinhaber: DIAMOND S.A., CH-6616 Losone-Locarno (CH); WANDEL & GOLTERMANN GmbH & Co, D-72800 Eningen u.A. (DE)
(72) Erfinder: De Marchi, Silverio, CH-6646 Contra (CH); Mühl, Thomas, Dr., D-72800 Eningen u.A. (DE)
(74) Vertreter: Wenger, René

(56) Entgegenhaltungen:
- EP-A- 0 351 803
- PATENT ABSTRACTS OF JAPAN vol. 10, no. 212 (P-480) (2268) 24. Juli 1986 & JP-A-61 052 608 (NEC CORP.) 15. März 1986

## Beschreibung

Die Erfindung betrifft eine optische Steckverbindung zwischen einem Adapter und wahlweise einer ersten oder einer zweiten Kategorie von Steckerteilen, sowie eine optische Steckverbindung gemäss dem Oberbegriff von Anspruch 2. Derartige Kombinationen von Adaptern und Steckerteilen sind beispielsweise beim Geräteausgang an einem Messgerät zum Messen von Lichtwellenleitern erforderlich. Das Steckerteil ist ist dabei fest im Messgerät montiert, während der Adapter entfernt, bzw. ausgetauscht werden kann. Einerseits ist das Steckerteil für Reinigungszwecke leicht zugänglich und andererseits können je nach den zu prüfenden Steckertypen verschiedene Adapter angeschlossen werden.

Durch die EP-A 351 803 ist eine optische Steckverbindung gekannt geworden, bei der ebenfalls ein Steckerteil drehsicher an einer Buchse gehalten ist, welche sich gegenüberliegende Steckerstifte aufnimmt. Zum Schutz der Steckerstifte vor mechanischer Beschädigung ist die Stirnseite eines Stifts mit einer Kunststoffabdeckung versehen.

Ein Problem bei bekannten Kombinationen besteht darin, dass das Aufeinandertreffen bestimmter stationärer und mobiler Steckerteile im Adapter zu einer Beschädigung des einen oder anderen Bauteils führen könnte. Es handelt sich dabei namentlich um stationäre Steckerteile, deren Steckerstifte an der Stirnseite zum Erzielen einer erhöhten Rückflussdämpfung angeschrägt sind. Derartige Steckerteile dürfen nicht mit mobilen Steckerteilen zusammengeführt werden, deren Steckerstifte an der Stirnseite keine Anschrägung aufweisen. Die dauernde Beaufschlagung des stationären Steckerteils würde mit der Zeit zu einer Abnützung der angeschrägten Stirnfläche führen. Andererseits können aber mobile Steckerteile mit angeschrägter Stirnseite ohne weiteres mit stationären Stekkerteilen ohne Anschrägung zusammengeführt werden, weil die angeschrägte Fläche jeweils nur wenige Male zum Zeitpunkt der Messung beaufschlagt wird, was noch nicht unmittelbar zu einer Beschädigung führt.

Eine Aufgabe der Erfindung besteht daher darin, eine optische Steckverbindung mit einem Adapter zu schaffen, der mit Stekkerteilen unterschiedlicher Kategorie verbindbar ist, wobei jedoch ein Steckerteil einer ganz bestimmten Kategorie nur mit einem ihm zugeordneten Adapter kombinierbar ist. Diese Aufgabe wird mit einer Steckverbindung mit den Merkmalen im Anspruch 1 gelöst. Die Erfindung geht dabei vom Grundgedanken aus, die Schnittstelle für unterschiedliche Kombinationsmöglichkeiten zwischen den Adapter und das stationäre Stekkerteil zu legen und nicht etwa an den Eingang des Adapters. Die Ausgestaltung der Buchse für die Aufnahme verschiedener Kategorien von Verdrehsicherungen ermöglicht es, den Adapter für zwei unterschiedliche Kategorien von stationären Steckerteilen einzusetzen, nämlich beispielsweise für eine erste Kategorie gemäss Stand der Technik mit Steckerstiften ohne Anschrägung und für eine zweite Kategorie neuer Bauart mit angeschrägten Steckerstiften. Umgekehrt sind die stationären Steckerteile gemäss Erfindung derart ausgestaltet, dass darauf nur solche Adpater befestigt werden können, welche wenigstens die zu den Führungselementen korrespondierenden Ausnehmungen aufweisen. Alle anderen Adapter, deren Buchsen Mittel zur Aufnahme alternativer Verdrehsicherungen aufweisen, können dagegen nicht am Steckerteil befestigt werden.

Eine weitere Aufgabe der Erfindung besteht darin, eine optische Steckverbindung mit einem Adapter und mit einem Steckerteil zu schaffen, deren Zusammenwirken bezüglich Stabilität und Massgenauigkeit verbessert wird. Diese weitere Aufgabe wird mit einem Adapter und mit einem Steckerteil mit den Merkmalen im Anspruch 2 gelöst. Die Anordnung von wenigstens zwei achsparallelen Ausnehmungen in der Buchse mit dazugehörigen Führungselementen am Steckerteil führt zu einer wesentlichen Verbesserung der Seitenstabilität und zu einer Reduktion des Spiels.

Eine Vereinfachung der Bauweise kann dabei erreicht werden, wenn das Steckerteil einen Steckerstift aufweist, der von einem Steckergehäuse umgeben ist und wenn die Führungselemente einstückig mit dem Steckergehäuse verbunden sind. Wenn die Führungselemente dabei an der Stirnseite des Steckergehäuses angeordnet sind, können sie unmittelbar aus dem Material des Steckergehäuses herausgefräst werden.

Eine besonders optimale Verdrehsicherung und Führung ergibt sich, wenn die Buchse drei Ausnehmungen aufweist, wobei bezogen auf eine durch die Buchsenachse verlaufende Symmetrieebene eine in der Symmetrieebene liegende U-förmige Nut und diametral gegenüberliegend zwei auf beiden Seiten der Symmetrieebene und im Abstand zu dieser verlaufende L-förmige Nuten angeordnet sind. Dabei ergibt sich eine Art Dreipunktlagerung, wobei die Nuten nur eine sehr geringe Tiefe aufweisen müssen.

Weitere Vorteile und Einzelmerkmale der Erfindung ergeben sich aus der nachfolgenden Beschreibung eines Ausführungsbeispiels und aus den Zeichnungen. Es zeigen:
- Figur 1: die perspektivische Darstellung eines neuen Adapters mit je einem Steckerteil einer ersten und einer zweiten Kategorie,
- Figur 2: die perspektivische Darstellung eines Adapters gemäss Stand der Technik mit je einem Steckerteil einer ersten und einer zweiten Kategorie,
- Figuren 3 und 4: die sich aus Figur 1 ergebenden Kombinationen,
- Figuren 5 und 6: die sich aus Figur 2 ergebenden Kombinationen,
- Figur 7: einen Querschnitt durch einen erfindungsgemässen Adapter,
- Figur 8: einen Querschnitt durch ein erfindungsgemässes Steckerteil, und
- Figur 8a: der Endabschnitt des Steckerstifts am Steckerteil gemäss Figur 8 in vergrösserter Darstellung.

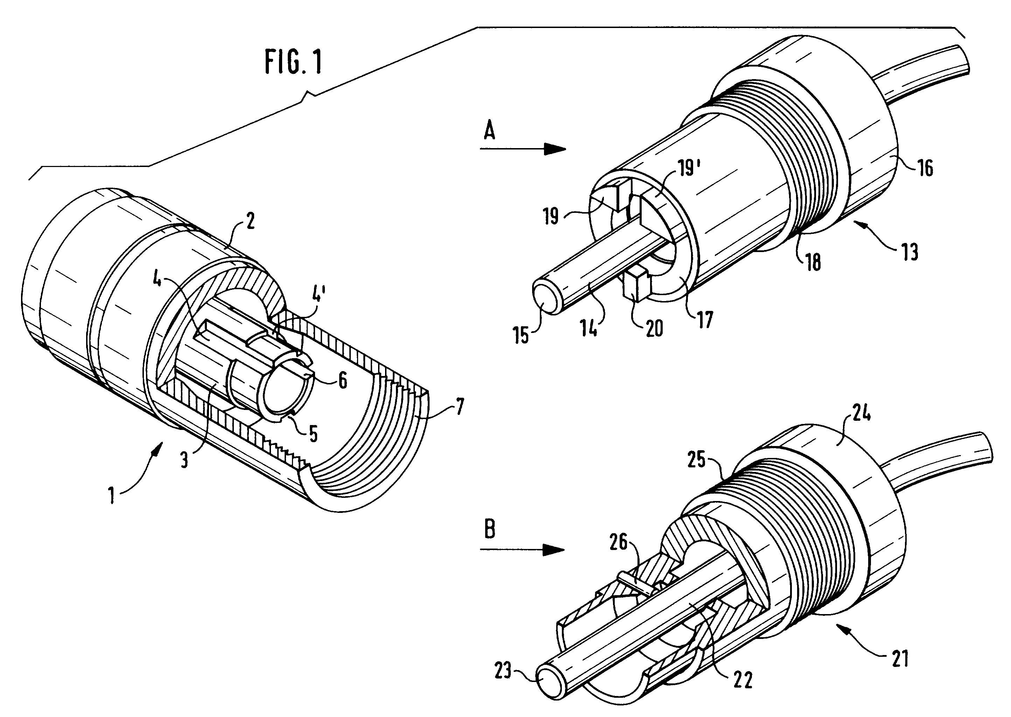

Figur 1 zeigt auf der linken Seite einen erfindungsgemässen Adapter 1, bestehend aus einem Buchsengehäuse 2 mit einer darin gehaltenen Buchse 3. Die Buchse weist an ihrem Aussenmantel achsparallele Ausnehmungen in der Form von etwa L-förmigen Nuten 4 und 4' und einer etwa U-förmigen Nut 5 auf. Zusätzlich ist die Buchse 3 aber auch mit einem achsparallelen Schlitz 6 versehen, der sich nur über einen Teil der Länge der Ausnehmungen 4, 4' und 5 erstreckt. Am Buchsengehäuse 2 ist auf einer Seite ein Innengewinde 7 angeordnet. Da die Buchse 3 drehbar im Buchsengehäuse 2 gehalten ist, kann das Buchsengehäuse wie eine Ueberwurfmutter zum lösbaren Befestigen des Adapters 1 an einem Steckerteil verwendet werden.

Auf der rechten Seite oben zeigt Figur 1 ein erfindungsgemässes Steckerteil 13 mit einem Steckergehäuse 16, in dem ein Steckerstift 14 gehalten ist. Die Stirnseite 15 dieses Stekkerstifts hat beispielsweise eine Anschrägung, wie nachstehend noch genauer beschrieben wird. An der Stirnseite 17 des Steckergehäuses 16 sind Führungselemente angeordnet, welche mit den Ausnehmungen in der Buchse 3 zusammenwirken und welche eine Verdrehsicherung bilden. Die Führungselemente bestehen aus zwei Kreisabschnitten 19 und 19' und einer zwischen den Kreisabschnitten diametral gegenüberliegenden Nase 20. Im rückwärtigen Teil des Steckergehäuses 16 ist ein Aussengewinde 18 angeordnet, das zum Innengewinde 7 des Adapters 1 passt.

Auf der rechten Seite unten zeigt Figur 1 ein Steckerteil 21 gemäss Stand der Technik mit einem Steckergehäuse 24 und mit einem darin gehaltenen Steckerstift 22, dessen Stirnseite 23 nicht angeschrägt ist. Ein Adapter kann ebenfalls auf ein Aussengewinde 25 aufgeschraubt werden. Als Verdrehsicherung dient ein quer durch die Gehäusewand gesteckter Stift 26, der mit dem Schlitz 6 in der Buchse 3 zusammenwirkt.

Die Kombinationen zwischen dem Adapter 1 und dem Steckerteil 13 oder 21 sind mit A und B bezeichnet. Beide Kombinationen sind möglich, d.h. in beiden Fällen kann der Adapter 1 auf das Steckerteil aufgeschraubt werden, wobei jeweils der Steckerstift 14, bzw. 22 lagerichtig in die Buchse 3 eindringt.

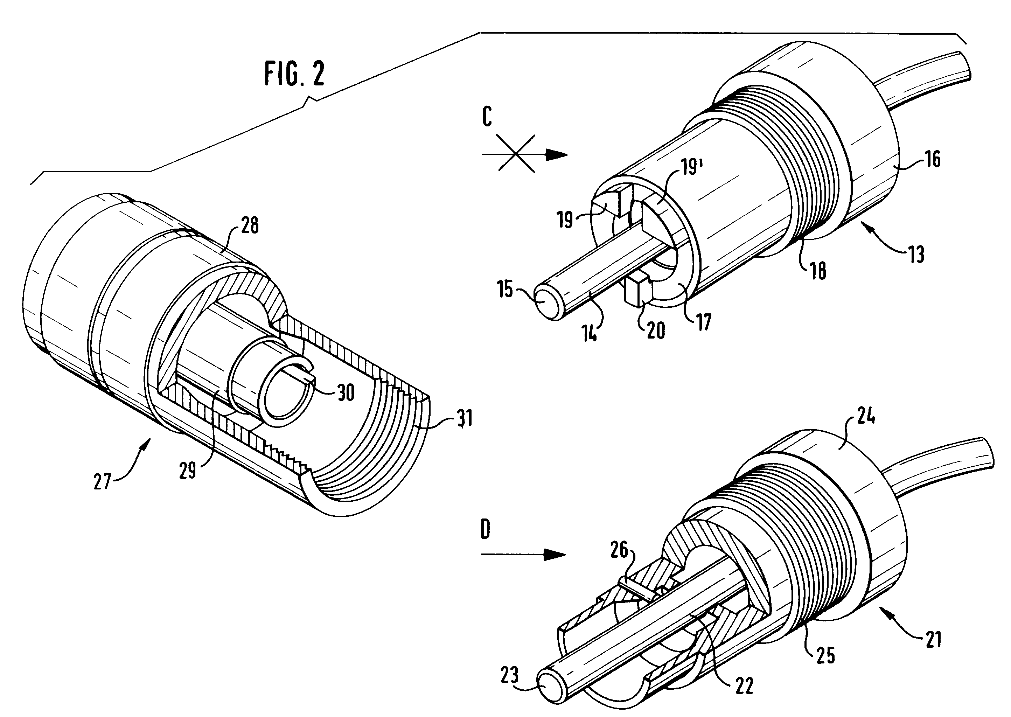

Figur 2 zeigt auf der linken Seite einen Adapter 27 gemäss Stand der Technik. Er weist ebenfalls ein Buchsengehäuse auf, das gleich oder identisch ist, wie das Buchsengehäuse 2 gemäss Figur 1. Dementsprechend ist auch ein Innengewinde 31 vorgesehen. Die im Buchsengehäuse 28 drehbar gehaltene Buchse 29 weist dagegen lediglich einen achsparallelen Schlitz 30 auf.

Die auf der rechten Seite von Figur 2 dargestellten Steckerteile 13 und 21 sind absolut identisch mit denjenigen in Figur 1. Die sich aus der Figur 2 ergebenden Kombinationen sind mit C und D bezeichnet, wobei allerdings nur die Kombination D möglich ist. Diese Kombination entspricht dem bekannten Stand der Technik. Dagegen ist die Kombination C, also ein Adapter 27 gemäss Stand der Technik mit einem Steckerteil 13 gemäss Erfindung, nicht möglich, weil an der Buchse 29 keine zu den Führungselementen 19, 19' und 20 korrespondierende Ausnehmungen vorhanden sind. Obwohl damit mobile Stecker verschiedener Bauart in den Adapter 27 eingesteckt steckt werden können, sind unerlaubte Steckerpaarungen doch nicht möglich, weil der Adapter 27 nicht an neue Steckerteile 13 angeschlossen werden kann.

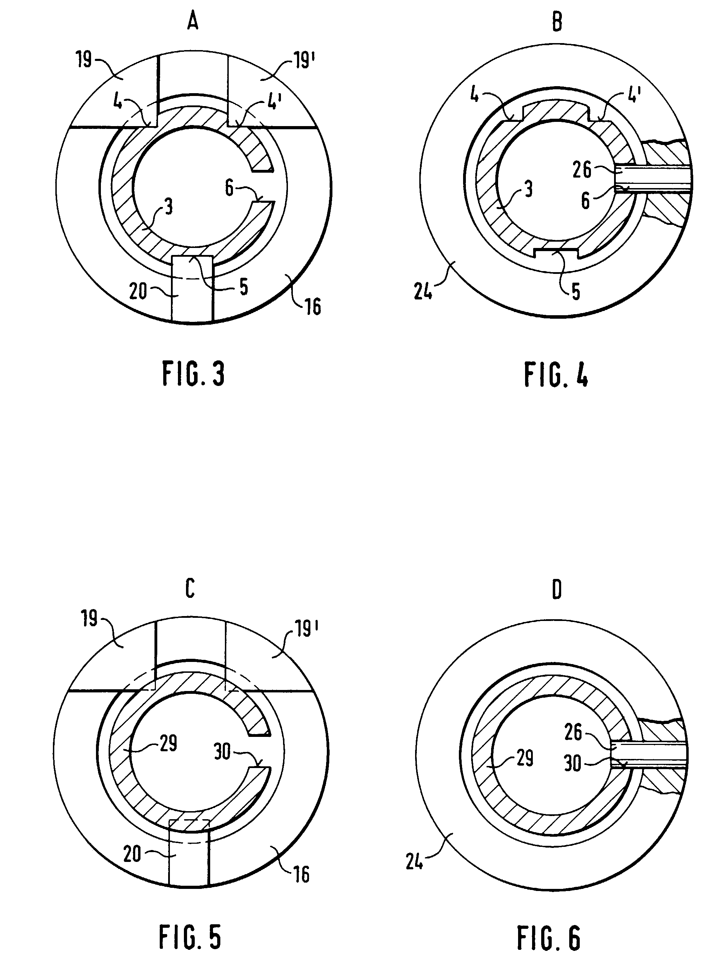

In den Figuren 3 bis 6 sind die Kombinationen A, B, C und D nochmals als Querschnitte dargestellt. Figur 3 zeigt die Kombination A zwischen erfindungsgemässem Adapter und Stekkerteil. Aus dieser Figur ist auch ersichtlich, wie sowohl die U-förmige Nut 5, als auch die Nase 20 auf einer Symmetrieebene liegen, welche durch die Buchsenachse verläuft. Diametral gegenüberliegend und auf beiden Seiten im Abstand zu dieser Symmetrieebene sind die L-förmigen Nuten 4 und 4', bzw. die beiden Kreisabschnitte 19 und 19' angeordnet. Der durchgehende Schlitz 6 erfüllt bei der Kombination A keinerlei Funktion.

Dagegen ist aus Figur 4 ersichtlich, wie bei der Kombination B der Stift 26 einer bekannten Kategorie von Steckerteilen in den Schlitz 6 eindringt und derart eine lagerichtige Positionierung zwischen Buchse und Steckerstift bewirkt. Anstelle eines durchgehenden Schlitzes könnte selbstverständlich ebenfalls nur eine achsparallele Nut angeordnet sein. Allerdings muss in jedem Fall die Länge des Stiftes 26 so dimensioniert sein, dass dieser nicht in die U-förmige Nut 5 eingeführt werden kann.

Figur 5 zeigt die unmögliche Kombination C, bei der der Adapter 27 nicht auf das Steckerteil 13 aufgeschraubt werden kann. Dies wird durch die Führungselemente 19, 19' und 20 verhindert.

Lediglich der Vollständigkeit halber ist auch noch die Kombination D gemäss dem bekannten Stand der Technik dargestellt, wobei wiederum der Stift 26 in den Schlitz 30 der Buchse 29 eindringt, welche sonst keine weiteren Ausnehmungen mehr aufweist.

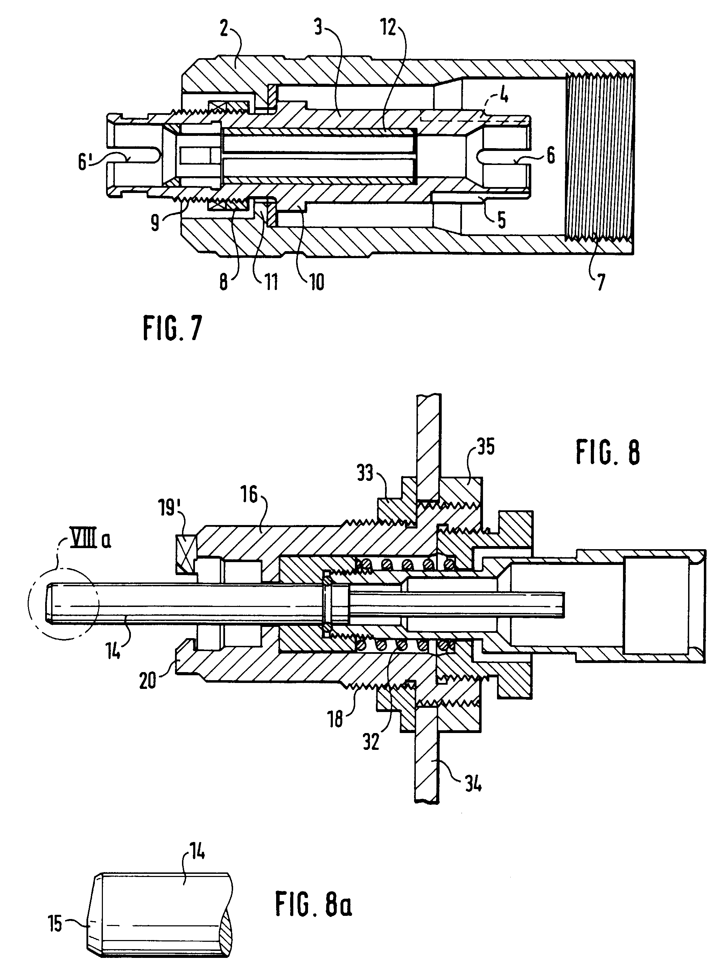

Figur 7 zeigt den Aufbau des erfindungsgemässen Adapters 1 etwas genauer. Das Buchsengehäuse 2 ist innen mit einer umlaufenden Schulter 11 versehen, an welcher die Buchse 3 befestigt werden kann. Zu diesem Zweck hat die Buchse einen umlaufenden Flansch 10 und einen Gewindeaschnitt 9. Mit Hilfe einer Ringmutter 8, welche nach dem Aufschrauben verklebt wird, kann die Buchse 3 drehbar im Buchsengehäuse 2 gehalten werden. Eine geschlitzte Innenbuchse 12 sorgt mit ihrer leichten Federvorspannung dafür, dass die von beiden Seiten in die Buchse eingeführten Steckerstifte absolut passgenau und konzentrisch gehalten werden. Das aus dem Buchsengehäuse 2 hinausragende Ende der Buchse ist ebenfalls mit einem achsparallelen Schlitz 6' versehen. Dadurch ist gewährleistet, dass jeder in den Adapter eingesteckte mobile Stecker nur in einer bestimmten winkelmässigen Position eingesteckt werden kann.

Figur 8 zeigt das erfindungsgemässe stationäre Steckerteil 13, das beispielsweise an der Gehäusewand 34 eines Messgerätes fixiert werden kann. Zu diesem Zweck können Ringmuttern 33 und 35 aufgeschraubt werden, wobei die Ringmutter 33 auf dem gleichen Aussengewinde 18 sitzt, wie das Buchsengehäuse 2 des aufzuschraubenden Adapters. Der Steckerstift 14 ist axial federnd im Steckergehäuse 16 gehalten, wobei eine Druckfeder 32 die erforderliche Federkraft aufbringt.

Figur 8a zeigt, wie die Stirnseite 15 des Steckerstifts 14 unter einem Winkel von beispielsweise 8° angeschrägt ist. Dies entspricht einem Radius R von beispielsweise 2,5mm. Der im Steckerstift zentrisch gehaltene Lichtwellenleiter wird an der Stirnseite von dieser Anschrägung ebenfalls erfasst, was auf an sich bekannte Weise zu einer erhöhten Rückflussdämpfung (high return loss) führt. Selbstverständlich ist die relative Drehlage des Steckerstifts zum Steckergehäuse 16 ebenfalls fest vorgegeben und fixiert, so dass die Anschrägung in der Buchse 3 stets die gleiche Position einnimmt.

Unter der Voraussetzung, dass die bekannten Steckerteile 21 gemäss den Figuren 1 und 2 mit Steckerstiften 22 ohne Anschrägung ausgestattet sind, kann nie ein mobiles Steckerteil ohne Anschrägung auf ein stationäres Steckerteil mit Anschrägung stossen. Dies würde durch die Kombination C gemäss Figur 5 verhindert, indem der entsprechende Adpater nicht auf das Steckerteil aufgeschraubt werden könnte. Stationäre Steckerteile mit Anschrägung können ausschliesslich mit mobilen Steckerteilen mit Anschrägung gepaart werden, während jedoch stationäre Steckerteile ohne Anschrägung sehr wohl auch mit mobilen Steckerteilen mit oder ohne Anschrägung gepaart werden können.

## Patentansprüche

1. Optische Steckverbindung zwischen einem Adapter (1) und wahlweise einer ersten oder zweiten Kategorie von Stekkerteilen (13, 21), welche einen Steckerstift (14, 22) aufweisen, der in einem Steckergehäuse (16, 24) gehalten ist, sowie eine Verdrehsicherung, welche mit einer Buchse (3) am Adapter derart zusammenwirkt, dass sie eine Verbindung nur bei lagerichtiger Position zwischen Stekkerteil und Buchse erlaubt,
wobei die Verdrehsicherung der ersten Kategorie von Steckerteilen (21) einen quer im Steckergehäuse (24) angeordneten Stift (26) aufweist, der mit einem achsparallelen Schlitz (6) oder mit einer achsparallelen Nut in der Buchse (3) zusammenwirkt,
und wobei die Verdrehsicherung der zweiten Kategorie von Steckerteilen (13) wenigstens zwei in ungleichmässiger Winkelteilung am Steckergehäuse (16) angeordnete und gegen den Steckerstift (14) gerichtete Führungselemente (19, 19', 20) aufweist, welche mit wenigstens zwei achsparallelen Ausnehmungen (4, 4', 5) am Aussenmantel der Buchse zusammenwirken.

2. Optische Steckverbindung zwischen einem Adapter (1) und einem Steckerteil (13), wobei der Adapter lösbar mit dem Steckerteil verbunden ist und das Steckerteil einen Steckerstift (14) aufweist, der von einem Steckergehäuse (16) umgeben ist, sowie eine Verdrehsicherung, welche mit einer Buchse (3) am Adapter (1) zusammenwirkt und welche eine Verbindung nur bei lagerichtiger Position zwischen Steckerteil (13) und Buchse (3) erlaubt, dadurch gekennzeichnet, dass am Aussenmantel der Buchse (3) in ungleichmässiger Winkelteilung wenigstens zwei achsparallele Ausnehmungen (4, 4', 5) angeordnet sind, welche mit zwei korrespondierenden Führungselementen (19, 19', 20) am Steckergehäuse (16) zusammenwirken.

3. Optische Steckverbindung nach Anspruch 2, dadurch gekennzeichnet, dass die Führungselemente einstückig mit dem Steckergehäuse verbunden sind.

4. Optische Steckverbindung nach Anspruch 3, dadurch gekennzeichnet, dass die Führungselemente an der Stirnseite (17) des Steckergehäuses (16) angeordnet sind.

5. Optische Steckverbindung nach einem der Ansprüche 2 bis 4, dadurch gekennzeichnet, dass die Buchse (3) drei Ausnehmungen (4, 4', 5) aufweist, wobei bezogen auf eine durch die Buchsenachse verlaufende Symmetrieebene eine in der Symmetrieebene liegende U-förmige Nut (5) und diametral gegenüberliegend zwei auf beiden Seiten der Symmetrieebene und im Abstand zu dieser verlaufende L-förmige Nuten (4, 4') angeordnet sind.

6. Optische Steckverbindung nach Anspruch 5, dadurch gekennzeichnet, dass die Führungselemente am Steckerteil (13) als zwei in die L-förmigen Nuten passende Kreisabschnitte (19, 19') und als eine in die U-förmige Nut passende Nase (20) ausgebildet sind.

7. Optische Steckerverbindung nach einem der Ansprüche 2 bis 6, dadurch gekennzeichnet, dass die Buchse (3) zusätzlich zu den Ausnehmungen (4, 4', 5) einen achsparallelen Schlitz 6) aufweist, so dass der Adapter (1) auch noch mit einem Steckerteil (21) einer anderen Kategorie verbindbar ist, dessen Verdrehsicherung ausschliesslich mit dem Schlitz (6) zusammenwirkt.

8. Optische Steckverbindung nach einem der Ansprüche 2 bis 7, dadurch gekennzeichnet, dass das Steckerteil (13) einen Steckerstift (14) aufweist, dessen Stirnseite (15) zum Erzielen einer erhöhten Rückflussdämpfung am Faseraustritt mit einer Anschrägung versehen ist.

## Revendications

1. Connecteur optique entre un adaptateur (1) et, au choix, une première ou une seconde catégorie d'éléments formant fiches (13, 21) pourvus d'une broche (14, 22) qui est tenue dans une enveloppe de fiche (16, 24) et d'une protection anti-torsion qui coopère avec une alvéole (3), prévue sur l'adaptateur, de manière à permettre une liaison uniquement dans la bonne position entre l'élément formant fiche et l'alvéole,
dans lequel la protection anti-torsion de la première catégorie d'éléments formant fiches (21) comprend une tige (26) qui est disposée transversalement dans l'enveloppe de fiche (24) et qui coopère avec une fente (6) ou une rainure parallèles à l'axe prévus dans l'alvéole (3),
et dans lequel la protection anti-torsion de la seconde catégorie d'éléments formant fiches (13) comprend au moins deux éléments de guidage (19, 19', 20) qui sont disposés sur l'enveloppe de fiche (16) suivant une répartition angulaire irrégulière et dirigés vers la broche (14), et qui coopèrent avec au moins deux creux (4, 4', 5) parallèles à l'axe prévus sur l'enveloppe extérieure de l'alvéole.

2. Connecteur optique entre un adaptateur (1) et un élément formant fiche (13), dans lequel l'adaptateur est relié de façon amovible à l'élément formant fiche, tandis que l'élément formant fiche comporte une broche (14) qui est entourée par une enveloppe de fiche (16), et une protection anti-torsion qui coopère avec une alvéole (3) prévue sur l'adaptateur (1) et qui permet une liaison uniquement dans la bonne position entre l'élément formant fiche (13) et l'alvéole (3), caractérisé en ce qu'il est prévu, disposés sur l'enveloppe extérieure de l'alvéole (3) suivant une répartition angulaire irrégulière, au moins deux creux (4, 4', 5) parallèles à l'axe qui coopèrent avec deux éléments de guidage correspondants (19, 19', 20) prévus sur l'enveloppe de fiche (16).

3. Connecteur optique selon la revendication 2, caractérisé en ce que les éléments de guidage sont solidaires de l'enveloppe de fiche.

4. Connecteur optique selon la revendication 3, caractérisé en ce que les éléments de guidage sont disposés sur le côté frontal (17) de l'enveloppe de fiche (16).

5. Connecteur optique selon l'une des revendications 2 à 4, caractérisé en ce que l'alvéole (3) comprend trois creux (4, 4', 5), étant précisé que par rapport à un plan de symétrie traversant l'axe de l'alvéole, il est prévu une rainure en U (5) située dans ledit plan de symétrie, et deux rainures en L (4, 4') diamétralement opposées, de part et d'autre du plan de symétrie, et espacées de celui-ci.

6. Connecteur optique selon la revendication 5, caractérisé en ce que les éléments de guidage prévus sur l'élément formant fiche (13) sont conçus sous la forme de deux segments de cercle (19, 19') adaptés aux rainures en L, et d'une saillie (20) adaptée à la rainure en U.

7. Connecteur optique selon l'une des revendications 2 à 6, caractérisé en ce que l'alvéole (3) comporte, en plus des creux (4, 4', 5), une fente (6) parallèle à l'axe, de sorte que l'adaptateur (1) peut encore être relié à un élément formant fiche (21) d'une autre catégorie dont la protection anti-torsion coopère exclusivement avec la fente (6).

8. Connecteur optique selon l'une des revendications 2 à 7, caractérisé en ce que l'élément formant fiche (13) comprend une broche (14) dont le côté frontal (15) est pourvu d'un chanfrein afin d'obtenir à la sortie des fibres un plus grand affaiblissement des courants réfléchis.

## Claims

1. Optical plug connection between an adapter (1) and selectively a first or second category of plug portions (13, 21), said plug portions possessing a plug ferrule (14, 22) held within a plug casing (16, 24) as well as a rotational security device coordinated with a sleeve (3) on the adapter in such a way that said rotational security device permits a connection only when in the correct position between plug portion and sleeve,
wherein the rotational security device of the first category of plug portions (21) possesses a pin (26) arranged transversely in the plug casing (24), said pin co-ordinating with an axis-parallel slot (6) or with an axis-parellel groove in the sleeve (3),
and wherein the rotational security device of the second category of plug portions (13) possesses at least two guide elements (19, 19', 20) arranged at an irregular angular distribution on the plug casing (16) and aligned towards the plug ferrule (14), said elements co-ordinating with at least two axis-parallel recesses (4, 4', 5) on the outer jacket of the sleeve.

2. Optical plug connection between an adapter (1) and a plug portion (13) wherein the adapter is connected with the plug portion to be able to be released and wherein the plug portion possesses a plug ferrule (14) said plug ferrule being surrounded by the plug casing (16) as well as a rotational security device co-ordinating with a sleeve (3) on the adapter (1) and permitting a connection between plug portion (13) and sleeve (3) only when in the correct position, characterized in that at least two axis-parallel recesses (4, 4', 5) are arranged on the outer jacket of the sleeve (3) at an irregular angular distribution, said recesses co-ordinating with at least two corresponding guide elements (19, 19', 20) on the plug casing (16).

3. Optical plug connection according to claim 2, characterized in that the guide elements are connected with the plug casing as one piece.

4. Optical plug connection according to claim 3, characterized in that the guide elements are arranged on the face (17) of the plug casing (16).

5. Optical plug connection according to one of the claims 2 to 4, characterized in that the sleeve (3) possesses three recesses (4, 4', 5) wherein, in relation to a plane of symmetry passing through the axis of the sleeve, a U-shaped groove (5) is arranged to lie within the plane of symmetry and, diametrically opposite, two L-shaped grooves are arranged on both sides of and at a distance from said plane of symmetry.

6. Optical plug connection according to claim 5, characterized in that the guide elements on the plug portion (13) are formed as two segments of a circle (19, 19') to fit the L-shaped grooves and as a lug (20) to fit the U-shaped groove.

7. Optical plug connection according to one of the claims 2 to 6, characterized in that, in addition to the recesses (4, 4', 5), the sleeve (3) possesses an axis-parallel slot (6) so that the adapter (1) can also be connected with a plug portion (21) of an alternative category, the rotational security device of which co-ordinates exclusively with said slot (6).

8. Optical plug connection according to one of the claims 2 to 7, characterized in that the plug portion (13) possesses a plug ferrule (14), the face (15) of which is provided with an inclination for attaining a high return loss at the outlet of the optical fiber.
